# EUROPEAN PATENT SPECIFICATION

(11) **EP 0 499 453 B1**
(45) Date of publication and mention of the grant of the patent: **05.06.1996**
(21) Application number: 92301148.0
(22) Date of filing: 12.02.1992
(51) Int. Cl.: C07F 9/18, C10M 137/10

(54) **A process for the production of ashless antiwear-antioxidant lubricating oil additive and lubricating oil containing the same**
Verfahren zur Herstellung eines aschefreien, verschleiss- und oxydationshemmenden Schmierölzusatz und Schmieröle enthaltend derselbe
Procédé pour de préparation d'un additif antioxydant anti-usure exempt de cendres pour d'huile lubrifiante et l'huile lubrifiante le contenant

(30) Priority: 15.02.1991 US 655611
(43) Date of publication of application: 19.08.1992
(73) Proprietor: TEXACO DEVELOPMENT CORPORATION, White Plains, New York 10650 (US)
(72) Inventor: Esche, Carl Kurt, Jr., Wappingers Falls, New York 12590 (US); Dancy, Julian Hawes, Poughkeepsie, New York 12608 (US); Love, Doris, Fishkill, New York 12524 (US)
(74) Representative: Green, Mark Charles

(56) References cited:
- US-A- 3 197 404
- US-A- 3 346 667
- CHEMICAL ABSTRACTS (STN online) Am. Chem. Soc. ACCESSION No. 98(17): 142 922z P.S. BELOV et al. "Synthesis and properties of nitrogen-, sulfur-, and phosphorus-con- taining additives made from glycerol monochlorohydrin ethers" Neftepererab. Neftekhim. (Moscow), (1), 20-2

## Description

The present invention relates to lubricating oils, and more particularly to an ashless, antiwear-antioxidant lubricating oil additive and to a process for its production.

In developing lubricating oils there have been many attempts of providing additives which impart antiwear-antioxidant properties in the lubricating oils. Zinc dithiophosphates have been used in formulated motor oils as antiwear-antioxidant additives for more than fifty years. However, zinc dithiophosphates give rise to ash which contributes to particulate matter found in automotive exhaust emissions. It is important to limit the particulate matter formed during engine use for toxicological and environment reasons, but it is equally important to maintain undiminished antiwear-antioxidant properties of the lubricating oil.

The present invention aims to provide an ashless, antiwear-antioxidant additive which imparts these desired properties to a lubricant.

U.S. Patent No., 2,568,784 discloses a method of producing reaction products of olefine oxides and phosphoric anhydride or phosphorus pentasulfide and the method of forming the same. The reaction products are prepared by reacting either phosphoric anhydride or phosphorus pentasulfide with an olefine oxide.

U.S. Patent 3,197,404 discloses a method of producing reaction products of phosphorus pentasulfide with epoxides and metal salts thereof. These reaction products and salts are useful in lubricating oil compositions.

U.S. Patent 3,346,667 discloses a reaction product produced from a phosphorus oxide or sulfide, an oxirane compound and a hydroxy or thiol compound together. These products are useful in synthetic plastics.

U.S. Patent 4,834,893 discloses phosphorodithioate substituted carboxylic anhydride or acid derivates and their corresponding metal salts have been found to be effective multifunctional additives for various lubricants and fuels. CHEMICAL ABSTRACTS, vol. 98, no. 17, Columbus, Ohio, US; abstract no. 142922z, P.S. BELOV et al. "Synthesis and properties of nitrogen-, sulfur-, and phosphorus-containing additivies made from glycerol monochlorohydrin ethers" discloses a product having the following formula: ROCH₂CH(X)CH₂SR₂, where R is alkyl, alkylphenyl or C₁₄-C₁₈ fatty acid residue, X is OH, OAc or OOCBu, R₂ is CSNEt₂ or P(S)(OR₁)₂ and R₁ is alkylphenyl, useful as lubricating oil additives.

The present invention relates to a method for the production of an ashless, antiwear-antioxidant lubricating oil additive. The ashless materials may be used as either a partial or complete replacement for the zinc dithiophosphates currently used for antiwear-antioxidant purposes.
The process comprises
(a) reacting a thiomethylphenol of formula 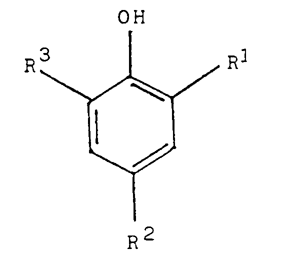 with phosphorus pentasulfide to form a dithiophosphoric acid intermediate; and
(b) treating said dithiophosphoric acid intermediate with an epoxide of formula 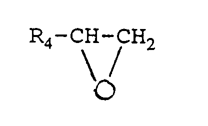 to yield a corresponding mixed dithiophosphoric ester alcohol product of formulae 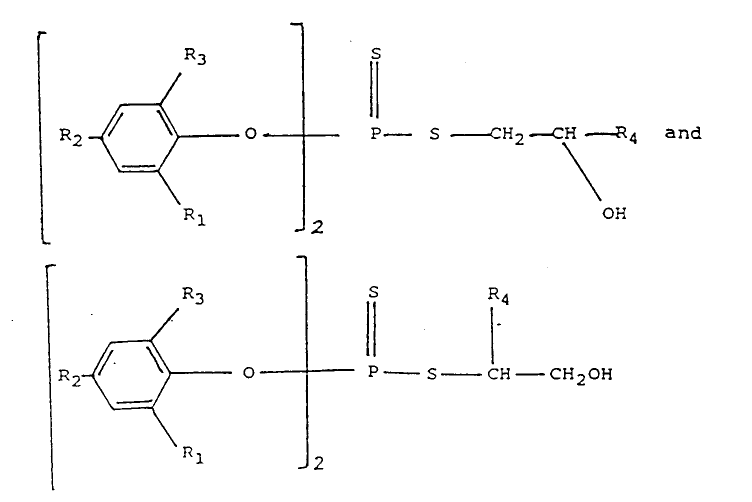 wherein R₁, R₂ and R₃ are each independently H, a (C₁-C₄₀) alkyl group, CH₂SR, C₆H₅- or C₆H₄- R₅ providing at least one of R₁, R₂ and R₃ is CH₂SR; R₄ is H or a (C₁-C₄₀) alkyl group; R is a (C₁-C₄₀) alkyl group, C₆H₅- or C₆H₄- R₅; and R₅ is a (C₁-C₄₀) alkyl group.

In the present method, thiomethylphenol is reacted with phosphorus pentasulfide, preferably in a ratio of 4:1, to give the corresponding dithiophosphoric acid. The dithiophosphoric acid is reacted with an epoxide, preferably in a ratio of about 0.5:1 to about 1.5:1 to give the corresponding alcohol derivatives (i.e., the ester alcohol product).

The equations for the reactions are as follows:

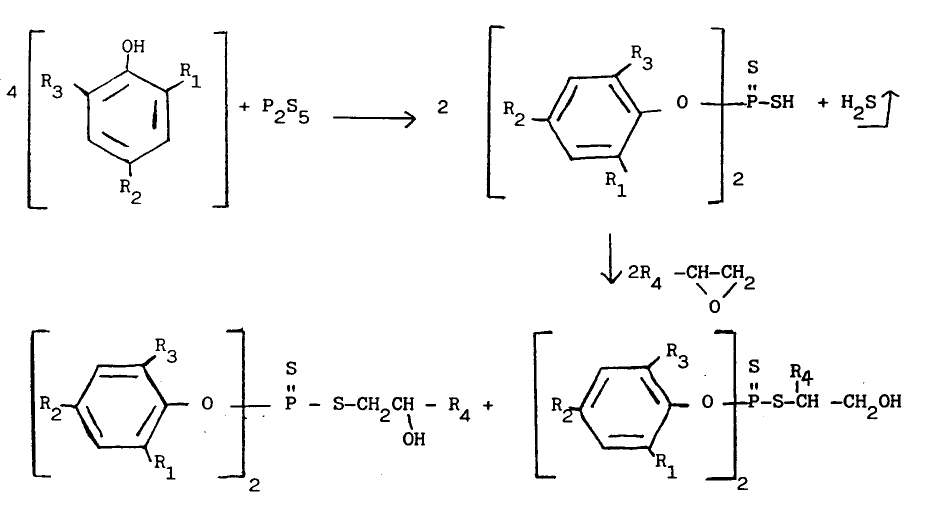

In the present method, the preferred thiomethylphenols may be represented by the following formulae: 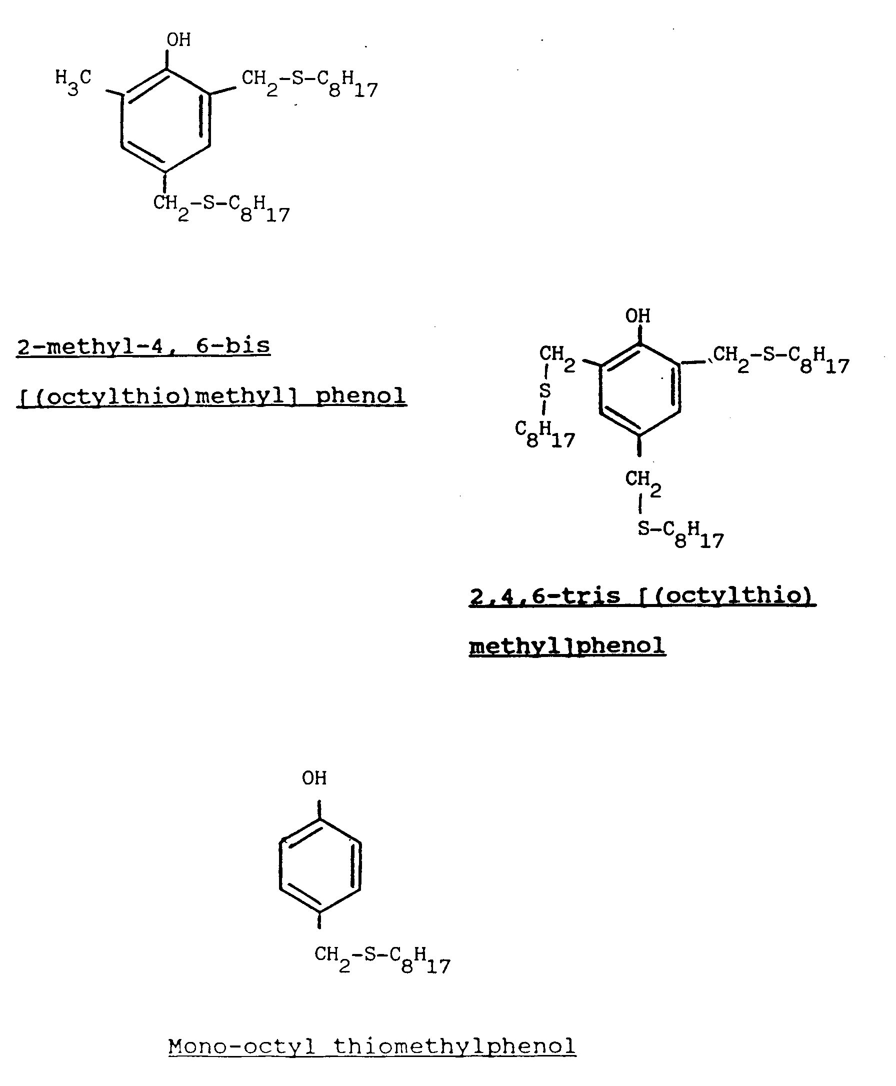
According to a preferred method of the present invention, the thiomethylphenol is added to a slurry of P₂S₅ in heptane at 70°C (150°F). The mole ratio of this alkylphenol to P₂S₅ is preferably 4:1 but may be in a range of 5:1 to 3:1. The mixture is stirred 1 hour at 70°C, 1 hour at 80°C, and 3 hours at 90°C. The unreacted P₂S₅ is then filtered off.

The dithiophosphoric acid and the epoxide are combined at an ambient temperature in a ratio of 1:1, but could be in a range of 0.5:1 to 1.5:1. The mixture is then stirred at 90°C for 3 hours, vacuum stripped and filtered.

In order to illustrate the present invention, the following non-limiting examples are provided.

### EXAMPLE I

### Preparation Of Dithiophosphoric Ester Alcohol From 2-Methyl -4,6-Bis[(Octylthio) Methyl] Phenol And A (C₁₈) Epoxide

### MATERIALS:

106.5 gms. (0.25M) 2-methyl-4,6- bis[(octylthio) methyl] phenol
14.0 gms, (0,0625M) P₂S₅
100 ml heptane
37.25 gms (0.125 M) C₁₈ epoxide

### PROCEDURE:

(1) Slurry of P₂S₅ in heptane prepared and heated to 70°C (158°F) under N₂ blanket (50ml/min).
(2) The phenol added batchwise over 1/2 hours keeping temperature between 65 and 70°C (149-158°F).
(3) Reaction stirred at 70°C for one hour
(4) Reaction stirred at 80°C for one hour
(5) Reaction stirred at 90°C for three hours
(6) Cooled and filtered. Filter cake washed with heptane. Washings added to filtrate.
(7) Entire filtrate and C₁₈ epoxide combined at ambient temperature.
(8) Stirred under N₂ (100ml/min) and heated to 90°C (194°F).
(9) Stirred under N₂ at 90°C for three hours to complete reaction and produce derivative.
(10) Derivative stripped to 90°C under water-pump vacuum and kept there until no more solvent came over.
(11) Filtered to provide 102 grams of dithiophosphoric ester alcohol derivative (156 gms theory).

Product analyzed as follows:

| TESTS | FOUND | THEORY |
|---|---|---|
| %S | 14.8 | 15.4 |
| %P | 2.59 | 2.5 |
| Neut.No. | 2 | 0 |

### EXAMPLE II

### Preparation Of Dithiophosphoric Ester Alcohol From Monooctylthiomethylphenol And A (C₁₈) Epoxide

### MATERIALS:

63.5 gms (0.25M) monooctylthiomethylphenol
14.0 gms. (0.0625M) P₂S₅
100 ml heptane
37.25 gms. (0.125M) C₁₈ expoxide

### PROCEDURE:

(1) Slurry of P₂S₅ in heptane prepared and heated to 70°C (158°F) under N₂ blanket (50ml/min).
(2) The phenol added batchwise over 1/2 hour, keeping temperature between 65° and 70°C (149-158°F).
(3) Reaction stirred at 70°C for one hour.
(4) Reaction stirred at 80°C for one hour.
(5) Reaction stirred at 90°C for three hours.
(6) Cooled and filtered. Filter cake washed with heptane. Washings added to filtrate.
(7) Entire filtrate and C₁₈ epoxide combined at ambient temperature.
(8) Stirred under N₂ (100ml/min) and heated to 90°F (194°F).
(9) Stirred under N₂ at 90°C for three hours to complete reaction and produce derivative.
(10) Derivative stripped to 90°C under water-pump vacuum and kept there until no more solvent came over.
(11) Filtered to provide 88 grams of dithiophosphoric ester alcohol derivative (113 gms theory).

Product analyzed as follows:

| TESTS | FOUND | THEORY |
|---|---|---|
| %S | 11.3 | 14.1 |
| %P | 2.96 | 3.4 |
| Neut.No. | 26 | 0 |

### EXAMPLE III

### Preparation Of Dithiophosphoric Ester Alcohol From 2-Methyl-4,6-Bis [(Octylthio)Methyl]Phenol And A (C₁₀) Epoxide

### MATERIALS:

106.5 gms (0.25M) 2-methyl - 4,6-bis [(octylthio)methyl]phenol
14.0 gms. (0.0625M) P₂S₅
100 ml. heptane
22.55 gms (0.125M) C₁₀ epoxide

### PROCEDURE:

(1) Slurry of P₂S₅ in heptane prepared and heated to 70°C (158°F) under N₂ blanket (50 ml/min).
(2) The phenol added batchwise over 1/2 hour, keeping temperature between 65° and 70°C (149-158°F).
(3) Reaction stirred at 70°C for 1 hour.
(4) Reaction stirred at 80°C for 1 hour.
(5) Reaction stirred at 90°C for 3 hours.
(6) Cooled and filtered. Filter cake washed with heptane. Washings added to filtrate.
(7) Entire filtrate and C₁₀ epoxide combined at ambient temperature.
(8) Stirred under N₂ (100ml/min) and heated to 90°F (194°F).
(9) Stirred under N₂ at 90°C for three hours to complete reaction and produce derivative.
(10) Derivative stripped to 90°C under water-pump vacuum and kept there until no more solvent came over.
(11) Filtered to provide 121 grams of dithiophosphoricester alcohol derivative (141 gms theory).

Product analyzed as follows:

| TESTS | FOUND | THEORY |
|---|---|---|
| %S | 15.6 | 15.4 |
| %P | 2.85 | 2.7 |
| Neut.No. | 11 | 0 |

### EXAMPLE IV

### Preparation Of Dithiophosphoric Ester Alcohol From 2,4,6-Tris[(Octylthio)Methyl] Phenol And A (C₁₈) Epoxide

### MATERIALS:

86.0 gms. (0.150m)2,4,6- tris[(octylthio) methyl]phenol
8.3 gms. (0.0375m) P₂S₅
100 ml heptane
22.3 gms. (0.075m) C₁₈ epoxide

### PROCEDURE:

(1) Slurry of P₂S₅ in heptane prepared and heated to 70°C (158°F) under N₂ blanket (50ml/min).
(2) The phenol added batchwise over 1/2 hour, keeping temperature between 65° and 70°C (149-158°F).
(3) Reaction stirred at 70°C for 1 hour.
(4) Reaction stirred at 80°C for 1 hour.
(5) Reaction stirred at 90°C for 3 hours.
(6) Cooled and filtered. Filter cake washed with heptane. Washings added to filtrate.
(7) Entire filtrate and C₁₈ epoxide combined at ambient temperature.
(8) Stirred under N₂ (100ml/min) and heated to 90°F (194°F).
(9) Stirred under N₂ at 90°C for three hours to complete reaction and produce derivative.
(10) Derivative stripped to 90°C under water-pump vacuum and kept there until no more solvent came over.
(11) Filtered to provide 89 grams of dithiophosphoric ester alcohol derivative (115 gms theory).

Product analyzed as follows:

| TESTS | FOUND | THEORY |
|---|---|---|
| %S | 14.7 | 14.6 |
| %P | 1.84 | 2.0 |
| Neut.No. | 17 | 0 |

The following are data from tests to illustrate the effectiveness of the present lubricant additives.

### Test Data Showing That The Epoxide Derivatives of Thioalkylated Phenols Are Antioxidants

All additives were evaluated in a Bench Oxidation Test (BOT). In the BOT, the additive (1.0 or 0.5 wt%), overbased sulfonate (0.18%Ca) and SNO-150 were heated to 175°C under N₂ and a sample taken (baseline). The mixture was then stirred at 175°C under a stream of air at 500ml/min. for six hours. Samples were taken every hour and the DIR* of each sample was determined against the baseline at 1712 cm⁻¹. The six hour DIR was used as a measure of oxidation; the smaller the value, the better the antioxidant properties. SNO is Solvent Neutral Oil.
*Differential Infra Red = Cell Absorbance/Cell Path Length

| SIX HOUR DIR | | | |
|---|---|---|---|
| Sample | No Additive | 1.0 wt% Additive | 0.5w% Additive |
| SNO-150 + Overbased Sulfonate + No Additive | 22.0 | | |
| SNO-150 + Overbased Sulfonate + Ex.I Additive | " | 6.28 | 11.49 |
| SNO-150 + Overbased Sulfonate + EX.II Additive | " | 2.57 | 7.00 |
| SNO-150 + Overbased Sulfonate + EX. III Additive | " | 2.23 | 10.34 |
| SNO-150 + Overbased Sulfonate + EX. IV Additive | " | 2.30 | 2.62 |
| SNO-7 + Overbased Sulfonate + Commercial Antioxidant | " | - | 14.81 |
| SNO-150 + Overbased Sulfonate + Zinc Dithiophosphate | " | 6.14 | - |

### Test Data Showing That The dioxide Derivative of Thiomethylated Phenols Are Antiwear Agents

The wear performance of the antiwear additives were evaluated in a Roxana Four-Ball Wear Tester, using 12.7 mm chrome alloy steel balls. Tests were run at 600 rpm, 40 kg load and 200°F for 30 minutes. Test samples were prepared by adding the experimental antiwear agent and a pro-wear contaminant to an SAE 30 base blend containing dispersant, detergent, and antioxidant. The blends were prepared by adding sufficient experimental additive to obtain the desired phosphorus level (0.05 or 0.14 %P) and sufficient pro-wear contaminant to provide differentiation. The pro-wear contaminant used represents one found in engine service and enables good discrimination between antiwear additives in a short test. The average wear scar diameter of each sample was measured at each concentration. Test results are reported below in mm average wear scar diameter. All those additives that showed decreases in wear scar diameter of the level of the known antiwear agent would be good antiwear agents.

| Four Ball Wear Screening Test Avg. Wear Scar Diameter (MM) | | |
|---|---|---|
| Sample | 0.14% P | 0.05% P |
| Known Good Antiwear Agent | 0.39 | 0.65 |
| EX. I Additive | 0.33 | 0.43 |
| EX. II Additive | 0.38 | 0.53 |
| Ex. III Additive | 0.40 | 0.46 |
| EX IV Additive | 0.36 | 0.48 |
| Poor Antiwear Agent | 0.54 | 0.62 |

## Claims

1. A process for the production of a lubricating oil additive which comprises
(a) reacting a thiomethylphenol of formula 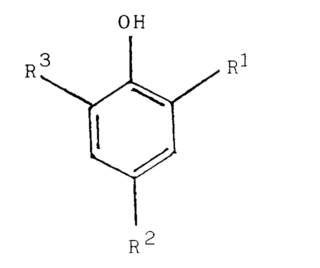 with phosphorus pentasulfide to form a dithiophosphoric acid intermediate; and
(b) treating said dithiophosphoric acid intermediate with an epoxide of formula 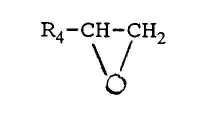 to yield a corresponding mixed dithiophosphoric ester alcohol product of formulae 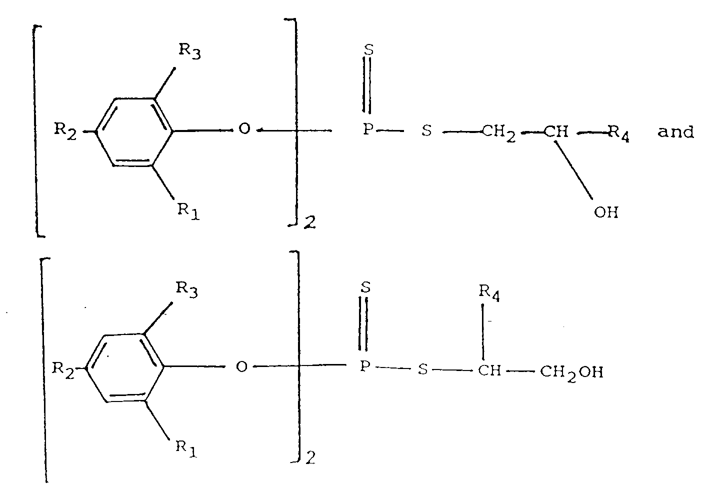 wherein R₁, R₂ and R₃ are each independently H, a (C₁-C₄₀) alkyl group, CH₂SR, C₆H₅- or C₆H₄- R₅ providing at least one of R₁, R₂ and R₃ is CH₂SR; R₄ is H or a (C₁-C₄₀) alkyl group; R is a (C₁-C₄₀) alkyl group, C₆H₅- or C₆H₄- R₅; and R₅ is a (C₁-C₄₀) alkyl group.

2. A process as claimed in Claim 1, wherein said thiomethyiphenol is reacted with phosphorus pentasulfide in a ratio of phenol to sulfide of 5:1 to 3:1.

3. A process as claimed in Claim 1 or Claim 2, wherein said dithiophosphoric acid is treated with an epoxide in a ratio of acid to epoxide ranging from 0.5:1.0 to 1.5:1.0.

4. A process as claimed in any one of Claims 1 to 3, wherein said thiomethylphenol is reacted with said phosphorus pentasulfide at a temperature ranging from 70°C to 90°C for a period of time ranging from 1 to 5 hours.

5. A process as claimed in any one of Claims 1 to 4, wherein said dithiophosphoric acid is reacted with said epoxide at a temperature of 90°C for a period of three hours.

6. A lubricating oil composition comprising a major amount of an oil of lubricating viscosity and a minor amount of fuel additive produced by a process as claimed in any one of Claims 1 to 5.

## Patentansprüche

1. Ein Verfahren zur Herstellung eines Schmierölzusatzes, welches umfaßt
(a) Umsetzen eines Thiomethylphenols der Formel 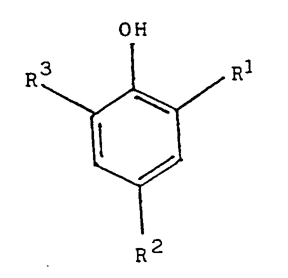 mit Phosphorpentasulfid, um ein Dithiophosphorsäure-Zwischenprodukt zu bilden; und
(b) Behandeln besagten Dithiophosphorsäure-Zwischenproduktes mit einem Epoxid der Formel 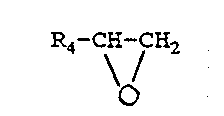 um ein entsprechendes gemischtes Dithiophosphorsäureester-Alkohol-Produkt der Formeln 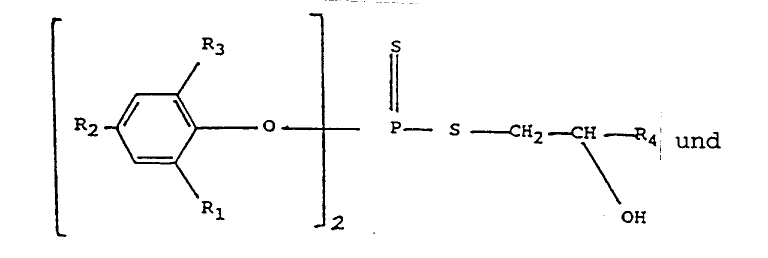 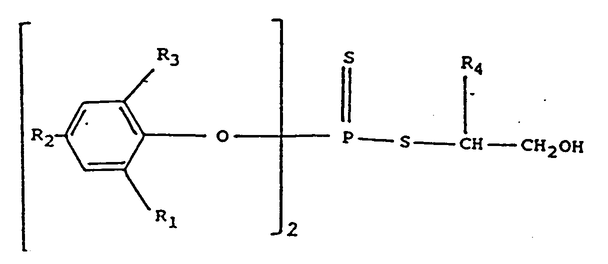 zu liefern, in denen R₁, R₂ und R₃ jeweils unabhängig H, eine (C₁-C₄₀)-Alkylgruppe, CH₂SR, C₆H₅- oder C₆H₄- R₅ sind, vorausgesetzt, daß wenigstens eines von R₁, R₂ und R₃ CH₂SR ist; R₄ H oder eine (C₁-C₄₀)-Alkylgruppe ist; R eine (C₁-C₄₀)-Alkylgruppe, C₆H₅- oder C₆H₄- R₅ ist; und R₅ eine (C₁-C₄₀)-Alkylgruppe ist.

2. Ein Verfahren nach Anspruch 1, wobei besagtes Thiomethylphenol mit Phosphorpentasulfid in einem Verhältnis von Phenol zu Sulfid von 5:1 bis 3:1 umgesetzt wird.

3. Ein Verfahren nach Anspruch 1 oder Anspruch 2, wobei besagte Dithiophosphorsäure mit einem Epoxid in einem Verhältnis von Säure zu Epoxid im Bereich von 0,5:1,0 bis 1,5:1,0 behandelt wird.

4. Ein Verfahren nach einem der Ansprüche 1 bis 3, wobei besagtes Thiomethylphenol mit besagtem Phosphorpentasulfid bei einer Temperatur im Bereich von 70°C bis 90°C für einen Zeitraum im Bereich von 1 bis 5 Stunden umgesetzt wird.

5. Ein Verfahren nach einem der Ansprüche 1 bis 4, wobei besagte Dithiophosphorsäure mit besagtem Epoxid bei einer Temperatur von 90°C für einen Zeitraum von drei Stunden umgesetzt wird.

6. Eine Schmierölzusammensetzung, die einen Hauptanteil eines Öls mit Schmierviskosität und einen Nebenanteil an Brennstoffzusatz, hergestellt mit einem Verfahren nach einem der Ansprüche 1 bis 5, umfaßt.

## Revendications

1. Procédé de préparation d'un additif pour huile lubrifiante, qui comprend
(a) la réaction d'un thiométhylphénol de formule 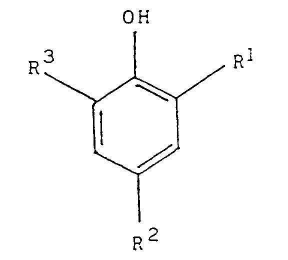 avec du pentasulfure de phosphore pour former un produit intermédiaire acide dithiophosphorique ; et
(b) le traitement dudit produit intermédiaire acide dithiophosphorique avec un époxyde de formule 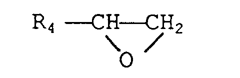 pour donner un produit mixte ester dithiophosphorique alcool correspondant, des formules 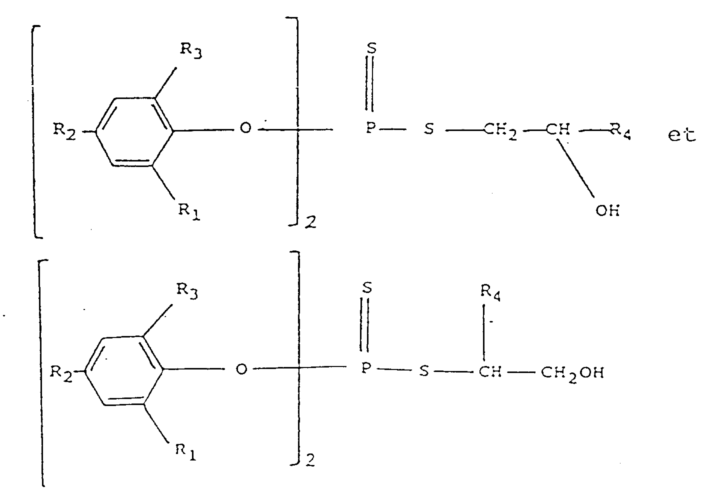 où R₁, R₂ et R₃ sont chacun indépendamment H, un groupe alkyle en C₁ à C₄₀, CH₂SR, C₆H₅- ou C₆H₄-R₅, à condition qu'au moins l'un de R₁, R₂ et R₃ soit CH₂SR ; R₄ est H ou un groupe alkyle en C₁ à C₄₀ ; R est un groupe alkyle en C₁ à C₄₀, C₆H₅-ou C₆H₄- R₅ ; et R₅ est un groupe alkyle en C₁ à C₄₀.

2. Procédé selon la revendication 1, dans lequel on fait réagir ledit thiométhylphénol avec le pentasulfure de phosphore dans un rapport du phénol au sulfure de 5:1 à 3:1.

3. Procédé selon la revendication 1 ou la revendication 2, dans lequel ledit acide dithiophosphorique est traité avec un époxyde dans un rapport de l'acide à l'époxyde allant de 0,5:1,0 à 1,5:1,0.

4. Procédé selon l'une quelconque des revendications 1 à 3, dans lequel on fait réagir ledit thiométhylphénol avec ledit pentasulfure de phosphore à une température allant de 70 °C à 90 °C pendant une durée allant de 1 à 5 heures.

5. Procédé selon l'une quelconque des revendications 1 à 4, dans lequel on fait réagir ledit acide dithiophosphorique avec ledit époxyde à une température de 90 °C pendant une durée de trois heures.

6. Composition d'huile lubrifiante comprenant une quantité majeure d'une huile de viscosité lubrifiante et une quantité mineure d'un additif pour carburant produit par un procédé tel que revendiqué dans l'une quelconque des revendications 1 à 5.
